# EUROPEAN PATENT SPECIFICATION

(11) **EP 4 495 545 B1**
(45) Date of publication and mention of the grant of the patent: **06.05.2026**
(21) Application number: 22932168.2
(22) Date of filing: 18.03.2022
(51) Int. Cl.: G01C 9/28, G01G 21/23

(54) **ATTACHMENT MECHANISM FOR BUBBLE-TYPE LEVEL IN BALANCE**
BEFESTIGUNGSMECHANISMUS FÜR BLASENTYP-WASSERWAAGE IN EINER WAAGE
MÉCANISME DE FIXATION POUR NIVEAU À BULLE DANS UNE BALANCE

(43) Date of publication of application: 22.01.2025
(73) Proprietor: A&D Company, Limited, Tokyo 170-0013 (JP)
(72) Inventor: ISHIMORI, Tomoyuki, Kitamoto-shi, Saitama 364-8585 (JP)
(74) Representative: dompatent
(86) International application number: PCT/JP2022/012609
(87) International publication number: WO 2023/175895

(56) References cited:
- EP-B1- 3 792 590
- JP-A- S61 108 927
- JP-U- S61 102 816
- JP-U- S61 178 415

## Description

### Technical Field

The present invention relates to an attaching mechanism for attaching a bubble level (hereinafter, simply referred to as "level") to a balance.

### Background Art

A balance as a weighing apparatus detects the product of a mass and a gravity as a force when a gravitational acceleration direction is constant, and detects a mass based on a mass of a reference weight, on the premise that the same gravity as a gravity applied to the reference weight is applied to a to-be-weighed object. Therefore, for performing accurate weighing, it is necessary, when a balance is installed, to make a horizontal adjustment to match the gravitational vector.

This horizontal adjustment is performed by, for example, adjusting a height of an appropriate leg piece out of a plurality of leg pieces provided on a case accommodating a mass sensor of the balance by moving up/down the leg piece by rotation of a rotating body linked to the leg piece in a predetermined direction. The operation of rotating the rotating body in the predetermined direction is performed while a deviation from the horizontality indicated by the level provided on the case of the balance is checked. Therefore, the balance cannot be installed horizontally unless the level is attached onto the case horizontally.

Conventionally, it is common to fix a level horizontally to a case of a balance directly or indirectly via some kind of member by using an adhesive agent or plaster. And once the level is fixed, the horizontal state cannot be readjusted. Therefore, there has been an inconvenience that readjustment of the horizontal state cannot be responded to when it becomes necessary.

As a solution to this inconvenience, an attaching structure for a level in a crane vehicle has been proposed in which a base plate is supported on a convex support member of an attaching member so as to be swingable in all directions, a level is fixed onto the base plate, and the level is fixed together with the base plate to the attaching member by three attaching bolts arranged at even intervals such that a tilt angle of the level is adjustable (Patent Literature 1). In addition, a mechanism for attaching a bubble tube serving as a level to a housing that is fixed to a box-shaped main body and has an open upper surface has been proposed in which two nuts are fixed to a bottom portion of the housing, coil springs are respectively arranged corresponding to these nuts, and a bubble tube with screw holes is pressed onto these coil springs, screws are inserted from the screw holes and their tip ends are screwed into the nuts, and by rotating these screws, the horizontal state of the bubble tube is adjusted (Patent Literature 2).

Document EP 3792590 B1 discloses a rotation device for an air bubble level of a measuring device.

### Citation List

### Patent Literatures

Patent Literature 1: Japanese Published Unexamined Utility Model Application No. S61-178415
Patent Literature 2: Japanese Registered Utility Model No. 3049294

### Summary of Invention

### Technical Problem

A horizontal adjusting mechanism in Patent Literature 1 has a drawback in which when an impact and vibration are applied to a level due to vibration of a crane vehicle after adjustment, the impact and vibration particularly in the vertical direction directly propagate to the level, and accordingly, a portion of the level is more greatly displaced in the vertical direction than the other portion and the horizontal state of the level changes. This Patent Literature 1 discloses an attaching structure for a level in a crane vehicle, and so when it is applied to a balance that is required to be highly precise, it is difficult to obtain a desired operation effect. Next, the horizontal adjusting mechanism in Patent Literature 2 has a drawback in which although an impact and vibration in the vertical direction applied to the level after adjustment can be absorbed by two coil springs, it is difficult to prepare two coil springs having exactly the same resilience, and therefore, there is a difference in resilience between the coil springs from the beginning, and in addition, the coil springs are made further different in resilience depending on a screw tightening amount at the time of adjustment, and accordingly absorptions of the coil springs with respect to the impact and vibration in the vertical direction vary, and a portion of the level is more greatly displaced in the vertical direction than the other portion, and the horizontal state of the level greatly changes.

The present invention was made in order to eliminate the above-described drawbacks, and an object thereof is to provide an attaching mechanism for a level to a balance which enables horizontal readjustment of the level after the level is attached to a balance and once subjected to a horizontal adjustment, and even when an impact and vibration is applied to the balance and/or level after the horizontal adjustment, can absorb the impact and vibration particularly in the vertical direction and prevent a portion of the level from being more greatly displaced in the vertical direction than the other portion, thereby maintaining the horizontality of the level.

### Solution to Problem

In order to achieve the object, an attaching mechanism for a level in a balance according to the present invention includes a level having a bubble chamber containing a bubble sealed together with liquid, a fixation base having a convex support portion and provided on a balance, a ring-shaped elastic body supported on the convex support portion, and a rotating member that is displaceable in an axial direction according to a rotation direction and a rotation amount for adjusting a tilt of the level, wherein the level is supported on the fixation base to be tiltable in all directions via the elastic body and attached at a plurality of points, preferably, three to five points such that the tilt of the level is adjustable by the rotating member.

By rotating a desired one of the rotating members arranged at a plurality of points by a desired amount in a desired direction, horizontal readjustment of the level can be performed, and even when an impact and vibration are applied to the balance and/or level after the horizontal adjustment, the impact and vibration particularly in the vertical direction can be absorbed by the ring-shaped elastic body to prevent a portion of the level from being more greatly displaced than the other portion, thereby maintaining the horizontality of the level. In addition, although an impact and vibration in the horizontal direction applied to the balance and/or the level insignificantly influence maintaining of the horizontality of the level, since the ring-shaped elastic body is supported by the convex support portion, the ring-shaped elastic body is also prevented by the convex support portion from being displaced in the horizontal direction.

Further, it is preferable that a convex surface of the convex support portion is formed to be spherical, the ring-shaped elastic body is formed of a disc spring, and the disc spring is joined at an inner circumferential side of one surface to the spherical surface of the convex support portion, and joined at an outer circumferential side of the other surface to a bottom surface of the level.

With this configuration, the level is supported by interposition of one disc spring, the supported state of the level becomes more stable, and an impact and vibration are reliably absorbed without variation.

Moreover, it is preferable that a flange portion is formed on the level, and the rotating member is constituted of a plurality of, preferably, three to five screws provided at even intervals in a circumferential direction on the flange portion.

With this configuration, the level can be adjusted in the horizontal direction by rotating a screw properly selected out of the plurality of screws according to a tilt state of the level, so that the adjustment can be easily and reliably made. Advantageous Effects of Invention

According to the present invention, even after a level is attached to a balance and once subjected to a horizontal adjustment, a horizontal readjustment can be performed, and even when an impact and vibration are applied to the balance and/or the level after the horizontal adjustment, a portion of the level can be prevented from being displaced in the vertical direction and the horizontality can be maintained.

### Brief Description of Drawings

FIG. 1 is a perspective view illustrating an embodiment of a balance as a subject matter of the present invention.
FIG. 2 is a back view of the same, illustrated with a portion of an accommodation box broken and an internal structure omitted.
FIG. 3 is an enlarged sectional view of the same, illustrating a state of attachment of a level to a fixation base.
FIG. 4 is an enlarged sectional view of the same, illustrating a state of attachment of the level to the fixation base with a lid plate removed.

### Description of Embodiments

Hereinafter, a preferred embodiment of the present invention will be described based on accompanying drawings. First, an entire configuration of a balance as a subject matter of the present invention will be described.

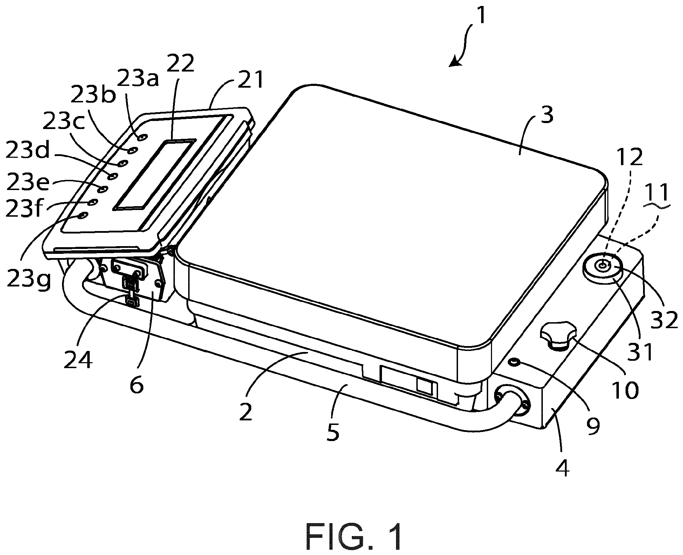

As illustrated in FIG. 1, a balance 1 includes a case 2 having an open upper surface and a substantially quadrilateral planar shape, a weighing pan 3 provided to cover the upper surface of the case 2, an accommodation box 4 fixed to one side surface of the case 2 and integrated with the case 2, a pipe-shaped support arm 5 supported swingably at a bent end portion on one end side by the accommodation box 4 and extending parallel to one side surface of the case 2, and a display control unit accommodation box 6 supported rotatably by a bent end portion on the other end side of the support arm 5.

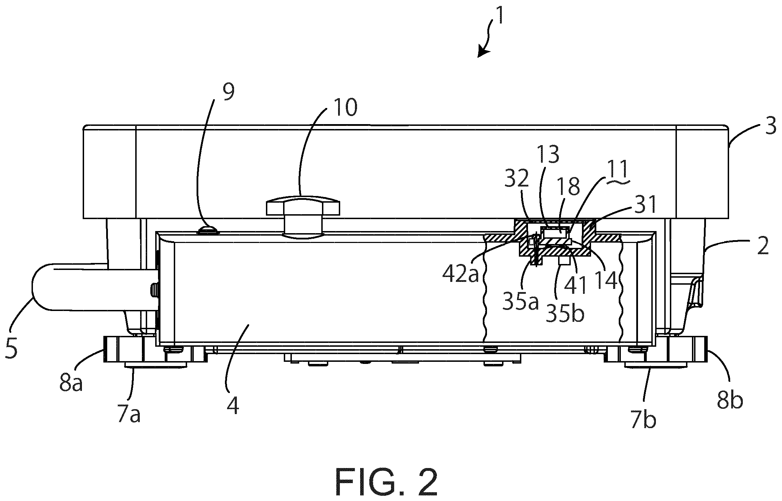

As illustrated in FIG. 2, the case 2 is installed on an installation surface such as a floor surface by leg pieces 7a and 7b (only two are illustrated) provided at four corners of a lower surface. Projecting amounts of the leg pieces 7a and 7b from a lower surface of the case 2 can be adjusted by rotation of rotating bodies 8a and 8b in a predetermined direction, and by this projecting amount adjustment, a horizontal adjustment of the case 2 can be made. In addition, the accommodation box 4 and the display control unit accommodation box 6 are out of contact with the installation surface but are at positions apart upward. The case 2 accommodates an electromagnetic balance type or load-cell type mass sensor (not illustrated), and the weighing pan 3 receives a to-be-weighed object placed thereon and is connected to the mass sensor. In addition, the case 2 accommodates an arithmetic unit that operates a mass based on data transmitted from the mass sensor.

Inside the accommodation box 4, a rotation mechanism that rotates with respect to the accommodation box 4 to swing the support arm 5, etc., are accommodated although these are not illustrated. The support arm 5 is swingable within a range of 90 degrees from the horizontal state illustrated in FIGS. 1 and 2 to a vertical state, and this swing is performed manually, and the display control unit accommodation box 6 is positioned at an uppermost side when the support arm 5 is in the vertical state although this is not illustrated. As illustrated in FIGS. 1 and 2, on the accommodation box 4, a ground connecting portion 9 to which a ground wire is connected, a fixation handle 10 that blocks a movement of the rotation mechanism to put the support arm 5 into a fixed state, and a round level 11 with which a horizontal state of the case 2 integrated with the accommodation box 4 is checked, are provided.

As illustrated in FIG. 2, the level 11 is attached to a bottom portion of the bottomed cylindrical fixation base 31 formed integrally with the accommodation box 4. A circumferential wall of the fixation base 31 has a thick upper portion, and is integrated at this thick portion with the accommodation box 4. As illustrated in FIGS. 2 to 4, the level 11 has liquid and a bubble (both of these are not illustrated) sealed inside a container 14 that defines a bubble chamber 18 to which a transparent lid 13 with a center circle 12 indicated thereon is fixed, and indicates a tilt direction and a tilt amount of the case 2 integrated with the accommodation box 4 with respect to the horizontality by a position of the bubble moving in the liquid. When the bubble of the level 11 matches the center circle 12, this shows that the case 2, that is, the balance 1 is in a horizontal state. As illustrated in FIG. 1, the center circle 12 can be visually recognized through a transparent lid plate 32 that is removably provided on the fixation base 31.

As illustrated in FIG. 1, a display unit 21 is provided on an upper surface of the display control unit accommodation box 6, and on an upper surface of this display unit 21, a display panel 22 including an LCD that displays a mass of a to-be-weighed object on the weighing pan 3, and seven operation buttons 23a, 23b, 23c, 23d, 23e, 23f, and 23g with which input of various operations are made, are provided. On a side surface of the display control unit accommodation box 6, a connection terminal 24 for connecting external equipment such as a personal computer is provided. Inside the display control unit accommodation box 6, a display control unit that controls an LCD display on the display panel 22, an external signal output unit that outputs an appropriate output signal to the outside, and a rotation mechanism that rotates the support arm 5 with respect to the display control unit accommodation box 6, etc., are accommodated although these are not illustrated.

Further, the arithmetic unit inside the case 2 and the display control unit inside the display control unit accommodation box 6 are electrically connected by wiring that passes through the inside of the accommodation box 4 and the inside of the support arm 5, and the display control unit outputs a control signal to the display panel 22 according to a signal output from the arithmetic unit, and displays a mass of the to-be-weighed object placed on the weighing pan 3 on the display panel 22.

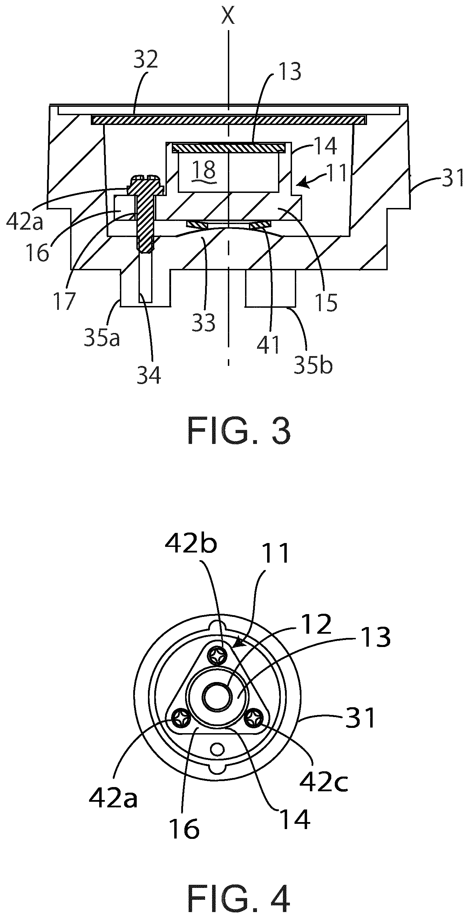

Subsequently, an attaching mechanism for the level 11 with respect to the fixation base 31 will be described. As can be most clearly seen in FIG. 3, a convex support portion 33 having a spherical convex surface is formed on an inner surface of a bottom portion of the fixation base 31. On this convex support portion 33, a disc spring 41 that is a ring-shaped elastic body is supported by being joined at an inner circumferential side of one surface in a thickness direction to the spherical surface of the convex support portion 33. The other surface of the disc spring 41 in the thickness direction is joined at its outer circumferential side to an outer surface of the container bottom portion 15 of the level 11. Accordingly, the level 11 is supported on the convex support portion 33 via the disc spring 41 to be tiltable in all directions. The fixation base 31, the disc spring 41, and the container 14 of the level 11 are arranged such that their axes X coincide with each other.

As illustrated in FIGS. 3 and 4, the container bottom portion 15 has a flange portion 16 having a substantially triangular planar shape, and in this flange portion 16, insertion holes 17 (only one is illustrated) are provided at three points at even intervals in the circumferential direction. Male screws 42a, 42b, and 43c as the rotating members are inserted through the respective insertion holes 17, and tip ends of the respective male screws 42a, 42b, and 42c are screwed into female screw holes 34 (only one of which is illustrated) formed in three columnar convex portions 35a and 35b (only two are illustrated) provided on a bottom portion of the fixation base 31. Accordingly, the level 11 is attached to the fixation base 31 such that a tilt of the level in a predetermined direction can be adjusted by rotating one selected among the three male screws 42a, 42b, and 42c in a predetermined direction. That is, when the selected male screw 42a, 42b, or 42c is rotated clockwise, the same side of the level 11 as the selected male screw 42a, 42b, or 42c descends around the axis X, and when the selected male screw 42a, 42b, or 42c is rotated counterclockwise, the same side of the level 11 as the selected male screw 42 ascends around the axis X.

Subsequently, horizontality readjustment of the level 11 will be described. First, the balance 1 is installed on a horizontal installation surface checked in advance. As long as the horizontality of the level 11 is maintained, the bubble of the level is positioned corresponding to the center circle 12, and on the other hand, when the horizontality is not maintained, the bubble of the level is positioned deviated from the center circle 12. The lid plate 32 of the fixation base 31 is removed and the state illustrated in FIG. 4 is established, the one male screw 42a, 42b, or 42c is selected according to a direction in which the bubble deviates from the center circle 12 and rotated clockwise or counterclockwise by a predetermined amount corresponding to the deviation distance to move the bubble, and by repeating this operation as necessary, the bubble is caused to coincide with the center circle 12. In a state where this bubble is coincident with the center circle 12, the level 11 is in a horizontal state.

When the level 11 is in this horizontal state, as described above, the fixation base 31, the disc spring 41, and the container 14 of the level 11 are in a state where their axes X coincide with each other, so that the level 11 is supported stably on the convex support portion 33 of the fixation base 31 via the disc spring 41. After that, even when an impact is applied to the balance 1, the applied force in the vertical direction is absorbed by the disc spring 41, and accordingly, a portion of the level 11 is prevented from being displaced in the vertical direction, and the horizontality of the level 11 is maintained.

The present invention is not limited to the above-described embodiment, and for example, the fixation base 31 may not be provided integrally with the accommodation box 4 but may be provided separately. Further, the fixation base 31 may be provided directly on the case 2, in such a manner that a side surface of the case 2 is extended horizontally and the fixation base 31 is provided on this extended portion, integrally therewith or separately therefrom, or when the display unit 21 is provided integrally with the case 2, the fixation base 31 may be provided integrally with the display unit 21 or may be provided separately therefrom. Furthermore, the ring-shaped elastic body may be a coil spring or an elastic rubber instead of the disc spring 41. Moreover, the rotating members are not limited to male screws 42a, 42b, and 42c, and the number of rotating members is not limited to three. Still moreover, the configuration of the balance 1 to which the present invention is applied is not limited to the above-described configuration, and the present invention is applicable to balances having various configurations such as a balance with a windshield.

### Reference Signs List

- 1: Balance

- 2: Case
- 3: Weighing pan
- 4: Accommodation box
- 5: Support arm
- 6: Display control unit accommodation box
- 7a, 7b: Leg piece
- 11: Level
- 12: Center circle
- 13: Lid
- 14: Container
- 15: Container bottom portion
- 16: Flange portion
- 17: Insertion hole
- 18: Bubble chamber
- 21: Display unit
- 22: Display panel
- 23a, 23b, 23c, 23d, 23e, 23f, 23g: Operation button
- 31: Fixation base
- 32: Lid plate
- 33: Convex support portion
- 34: Female screw hole
- 35a, 35b: Columnar convex portion
- 41: Disc spring
- 42a, 42b, 42c: Male screw

## Claims

1. An attaching mechanism for a bubble level in a balance(1), configured as an attaching mechanism for attaching a bubble level to a balance in a manner that enables horizontal adjustment, comprising:
a bubble level having a bubble chamber (18) containing a bubble sealed together with liquid;
a fixation base (31) having a convex support portion (33) and provided on a balance;
a ring-shaped elastic body supported on the convex support portion; and
a rotating member that is displaceable in an axial direction according to a rotation direction and a rotation amount for adjusting a tilt of the bubble level, wherein
the bubble level is supported on the fixation base to be tiltable in all directions via the elastic body and attached at a plurality of points such that the tilt of the bubble level is adjustable by the rotating member.

2. The attaching mechanism for a bubble level in a balance according to Claim 1, wherein
a convex surface of the convex support portion is formed to be spherical, and
the elastic body is a disc spring (41) and the disc spring is joined at an inner circumferential side of one surface to the spherical surface of the convex support portion, and joined at an outer circumferential side of the other surface to a bottom surface of the bubble level.

3. The attaching mechanism for a bubble level in a balance according to Claim 1 or 2, wherein
the bubble level has a flange portion (16) and the rotating member is a plurality of screws provided at even intervals in a circumferential direction on the flange portion.

## Patentansprüche

1. Befestigungsmechanismus für eine Libelle in einer Waage (1), der als ein Befestigungsmechanismus ausgebildet ist zum Befestigen einer Libelle an einer Waage in einer Weise, die eine horizontale Einstellung ermöglicht, aufweisend eine Libelle mit einer Blasenkammer (18), die eine mit Flüssigkeit versiegelte Blase enthält;
eine Fixierungsbasis (31), die einen konvexen Stützabschnitt (33) aufweist und auf einer Waage vorgesehen ist;
einen ringförmigen elastischen Körper, der auf dem konvexen Stützabschnitt gelagert ist; und
ein Drehelement, das in einer axialen Richtung gemäß einer Drehrichtung und einem Drehbetrag zum Einstellen einer Neigung der Libelle verschiebbar ist, wobei
die Libelle über den elastischen Körper in alle Richtungen neigbar auf der Fixierungsbasis gelagert und an einer Vielzahl Punkten so befestigt ist, dass die Neigung der Libelle durch das Drehelement einstellbar ist.

2. Befestigungsmechanismus für eine Libelle in einer Waage nach Anspruch 1, wobei
eine konvexe Oberfläche des konvexen Stützabschnitts kugelförmig ausgebildet ist, und
der elastische Körper eine Tellerfeder (41) ist, und die Tellerfeder an einer Innenumfangsseite einer Oberfläche mit der kugelförmigen Oberfläche des konvexen Stützabschnitts zusammengefügt ist und an einer Außenumfangsseite der anderen Oberfläche mit einer unteren Fläche der Libelle zusammengefügt ist.

3. Befestigungsmechanismus für eine Libelle in einer Waage nach Anspruch 1 oder 2, wobei
die Libelle einen Flanschabschnitt (16) hat und das Drehelement eine Vielzahl von Schrauben ist, die in gleichmäßigen Abständen in einer Umfangsrichtung an dem Flanschabschnitt vorgesehen sind.

## Revendications

1. Mécanisme de fixation pour un niveau à bulle dans une balance (1), conçu comme un mécanisme de fixation permettant de fixer un niveau à bulle à une balance de manière à permettre un réglage horizontal, comprenant :
un niveau à bulle ayant une chambre à bulle (18) contenant une bulle scellée conjointement avec un liquide ;
une base de fixation (31) ayant une partie support convexe (33) et fournie sur une balance ;
un corps élastique annulaire supporté sur la partie support convexe ; et
un élément rotatif qui est déplaçable dans une direction axiale selon une direction de rotation et une quantité de rotation permettant de régler une inclinaison du niveau à bulle, dans lequel
le niveau à bulle est supporté sur la base de fixation pour être inclinable dans toutes les directions par l'intermédiaire du corps élastique et est fixé en une pluralité de points de telle sorte que l'inclinaison du niveau à bulle est réglable par l'élément rotatif.

2. Mécanisme de fixation pour un niveau à bulle dans une balance selon la revendication 1, dans lequel
une surface convexe de la partie support convexe est formée de manière à être sphérique, et
le corps élastique est un ressort à disque (41) et le ressort à disque est relié, au niveau d'un côté circonférentiel interne d'une surface, à la surface sphérique de la partie support convexe, et est relié, au niveau d'un côté circonférentiel externe de l'autre surface, à une surface inférieure du niveau à bulle.

3. Mécanisme de fixation pour un niveau à bulle dans une balance selon la revendication 1 ou 2, dans lequel
le niveau à bulle a une partie bride (16) et l'élément rotatif est une pluralité de vis fournies à intervalles réguliers dans une direction circonférentielle sur la partie bride.
